(19) **Europäisches Patentamt**

**European Patent Office**

**Office européen des brevets**

(11) **EP 1 093 278 A2**

(12) **EUROPEAN PATENT APPLICATION**

(43) Date of publication:
**18.04.2001 Bulletin 2001/16**

(51) Int. Cl.7: **H04M 3/42**, H04M 7/00

(21) Application number: **00120958.4**

(22) Date of filing: **26.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **12.10.1999 JP 28950099**

(71) Applicant: **NEC CORPORATION**
**Tokyo (JP)**

(72) Inventors:
• **Saito, Shiro,**
**NEC Corporation**
**Tokyo (JP)**
• **Harasaki, Kazuhiro,**
**NEC Corporation**
**Tokyo (JP)**
• **Hirata, Hideyuki,**
**NEC Corporation**
**Tokyo (JP)**

(74) Representative:
**Baronetzky, Klaus, Dipl.-Ing. et al**
**Splanemann Reitzner**
**Baronetzky Westendorp**
**Patentanwälte**
**Rumfordstrasse 7**
**80469 München (DE)**

(54) **Access network based on the Internet Protocol**

(57)    A distributed access network (100) includes a master node (120) and a plurality of slave nodes (110) connected to the master node (120) through a network (140) such as an existing LAN. At the opposite ends of the access network (100), communication of communication data of a subscriber terminal (130) is performed by the V5 interface, and in order to allow the communication data to be communicated through the existing LAN in the inside of the access network (100), each of the master node (120) and the slave nodes (110) converts the communication data from the V5 interface into an IP packet or from an IP packet into the V5 interface.

**FIG. 1**

## Description

BACKGROUND OF THE INVENTION

Field of the Invention

The present invention relates to a switching system which accommodates the V5 interface, and more particularly to a distributed access network based on the IP having two nodes, an information communication method for a distributed access network, and a recording medium on which a program of an information communication method for a distributed access network is recorded.

Description of the Related Art

Attention is paid to a technique of connecting an exchange and a remote subscriber terminal such as, for example, a telephone set to each other using an access network in public communication services, and application of the technique in various fields is proceeding rapidly. As a standard for the technique, the V5 interface is standardized internationally. A conventional system which employs the V5 interface is disclosed, for example, in Japanese Patent Laid-Open No. 233181/1998, particularly in FIG. 19 of the document. According to the construction shown in FIG. 19 of the document, an exchange and an access network are connected to each other by the V5 interface, and a plurality of PSTN (Public Switched Telephone Network) terminals and a plurality of ISDN (Integrated Services Digital Network) terminals are connected to the access network. The access network includes a V5 interface section for interfacing with the V5 interface, a subscriber interface section for controlling connection to a PSTN terminal or an ISDN terminal, and a system management section for handing control data of the terminals.

The V5 interface is a standard of an interface and a communication protocol for interfacing between such an exchange and an access network as described above, and two standards of V5.1 (ETS 300 324-1 of the ETSI, G.964 of the ITU-T) and V5.2 (ETS 300 347-1 of the ETSI, G.965 of the ITU-T) are available. The exchange and the access network are physically connected to each other by a PCM Link of 2M bits/sec called E1 Link. This is a digital circuit generally called also PCM 30.

According to the V5.1 interface, the exchange and the access network are connected to each other by only one E1 Link, and a message channel in the E1 Link and a subscriber are coordinated fixedly in a one-by-one corresponding relationship. Since the E1 Link includes 30 channels, one V5.1 interface can accommodate 30 subscribers in the maximum.

On the other hand, according to the V5.2 interface, the exchange and the access network are connected to each other by 16 E1 Links in the maximum. In this instance, channels in the E1 Link and subscribers are not coordinated fixedly to each other, and a free channel is selected to connect each call of any subscriber. Therefore, the V5.2 interface can accommodate any number of subscribers.

In a conventional connection method in which an access network is used, calls of terminals connected to the access network are processed in a concentrated manner by a single access network apparatus and cannot be distributed in the inside. Further, while it is possible to prepare a plurality of access networks for one switch, this is not economical because each access network apparatus must include a termination apparatus of the V5 interface which corresponds to the V5 interface section described above.

Further, the arrangement of the terminals cannot be adjusted flexibly from restrictions to the laying condition of the E1 Link, connection lines between the terminals and the access networks and so forth.

Furthermore, while a LAN (Local Area Network) is laid in many offices in recent years, such existing equipments cannot be utilized effectively for PSTN terminals or ISDN terminals.

SUMMARY OF THE INVENTION

It is an object of the present invention to provide an access network and an information communication method by which terminals can be arranged flexibly at desired positions and calls of the terminals can be processed economically in a distributed manner.

It is another object of the present invention to provide an access network which can be constructed making effective use of an existing LAN equipment.

In order to attain the objects described above, according to an aspect of the present invention, there is provided an access network, comprising a master node connected to an external apparatus, at least one slave node which accommodates at least one subscriber terminal, and a network provided between the slave node and the master node, the master node and the slave node communicating information regarding the subscriber terminal on the network using a protocol different from a protocol used for connection to the outside of the network. The access network may include a plurality of master nodes and a plurality of slave nodes.

In short, the present invention provides an access network which comprises two kinds of nodes connected to each other based on the IP, that is, at least one master node and a plurality of slave nodes. The master node is on one hand connected to the slave nodes through the IP and on the other hand connected to an exchange through the V5 interface. Each of the slave nodes is on one hand connected to the master node through the IP and on the other hand connected to a plurality of PSTN terminals or ISDN terminals.

The access network may be constructed such that communication of information between the master node and the external apparatus and communication of information between the slave node and the subscriber terminal are performed in accordance with a first protocol while communication of information regarding the subscriber terminal on the network is performed in accordance with a second protocol different from the first protocol, and the master node and the slave node mutually convert the format of information in order to allow communication of information between the first and second protocols different from each other.

The information regarding the subscriber terminal may include input/output information which is inputted to/outputted from the subscriber terminal and control information to be used to control operation of the subscriber terminal.

The slave node may include an information format conversion section and a terminal control section, and the information format conversion section may convert the format of information in order to communicate information with the master node using the second protocol and communicate information with the terminal control section using the first protocol whereas the terminal control section provides, when information is received from the information format conversion section, input/output information to the subscriber terminal using the first protocol and controls the subscriber terminal based on the control information, but transmits, when information is received from the subscriber terminal, the information to the information format conversion section.

Preferably, the first protocol is a protocol for the V5 interface, and the second protocol is a protocol based on the Internet Protocol. The control information may be communicated using the TCP/IP on the network, and the input/output information may be communicated using the Internet Protocol on the network. When the input/output information is communicated using the Internet Protocol, the input/output information for 30 time slots of the Bch of the V5 interface may be gathered into an IP packet.

Preferably, the access network further comprise a maintenance-operation terminal connected to the network and operable to transmit, prior to communication of information on the network, an IP address of the master node to the slave node and transmit an IP address of the slave node to the master node.

According to another aspect of the present invention, there is provided a method of communicating, in an access network wherein a master node connected to an external apparatus and a slave node which accommodates a subscriber terminal are connected to each other by a network, information with the subscriber terminal, comprising a first step performed by the master node of receiving information destined for the subscriber terminal in a first protocol from the outside of the access network, converting the format of the information and transmitting the information of the converted format to the slave node using a second protocol, and a second step performed by the slave node of receiving the information in the second protocol, converting the format of the received information and transmitting the information of the converted format to the subscriber terminal using the first protocol. Also a computer-readable recording medium on which a program for carrying out the information communication method is recorded is provided.

According to a further aspect of the present invention, there is provided a method of communicating, in an access network wherein a master node connected to an external apparatus and a slave node which accommodates a subscriber terminal are connected to each other by a network, information with the subscriber terminal, comprising a first step performed by the subscriber terminal of transmitting information destined for another subscriber terminal which is outside the access network using a first protocol, a second step performed by the slave node of receiving the information from the subscriber terminal in the first protocol, converting the format of the information and transmitting the information of the converted format to the master node using a second protocol, and a third step performed by the master node of receiving the information in the second protocol, converting the format of the received information and transmitting the information of the converted format to the external subscriber terminal to the access network using the first protocol. Also a computer-readable recording medium on which a program for carrying out the information communication method is recorded is provided.

With the access network, information communication method and recording medium, by disposing an existing LAN equipment between a master node and a slave node, the existing equipment can be utilized effectively, and subscriber terminals can be disposed flexibly at desired positions.

By such disposition, call processes of the individual subscriber terminals can be distributed economically.

Further, since control information of the V5 and so forth are communicated using the IP between the master node and each slave node, a termination apparatus of the V5 interface need not be disposed in each slave node, and consequently, the access network can be constructed economically.

The above and other objects, features and advantages of the present invention will become apparent from the following description and the appended claims, taken in conjunction with the accompanying drawings in which like parts or elements are denoted by like reference symbols.

BRIEF DESCRIPTION OF THE DRAWINGS

FIG. 1 is a block diagram of a distributed access network to which the present invention is applied;

FIG. 2 is a block diagram showing a detailed construction of a slave node shown in FIG. 1;

FIG. 3 is a diagrammatic view illustrating data communicated between a slave node and a master node shown in FIG. 1; and

FIG. 4 is a flow chart illustrating a flow of processing until a PSTN subscriber terminal is controlled based on PSTN control information.

DESCRIPTION OF THE PREFERRED EMBODIMENT

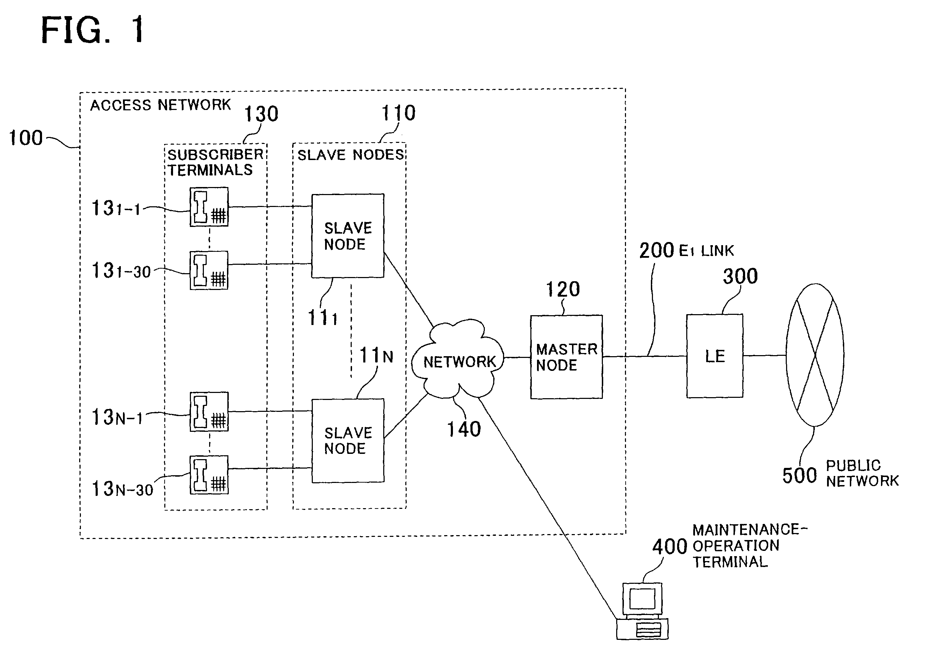

Referring first to FIG. 1, there are shown an access network 100 to which the present invention is applied, a local exchange (LE) 300 connected to the access network 100 by an E1 Link 200, a maintenance-operation terminal 400 used to collectively perform maintenance and operation of the access network 100, and a public network 500 connected to the local exchange 300.

The access network 100 includes a slave node group 110, a single master node 120, a large number of subscriber terminals 130, and a network 140. The slave node group 110 includes N slave nodes $11_1$ to $11_N$, each of which is connected to the master node 120 by the network 140 and accommodates a plurality of subscriber terminals 130. Each of the subscriber terminals 130 is a telephone set which is used by each subscriber of, for example, the PSTN or the ISDN BA (ISDN Basic Access). One slave node can accommodate 30 telephone sets in the maximum for the PSTN and the ISDN in a mixed state. In the example shown in FIG. 1, the slave node $11_1$ accommodates 30 subscriber terminals $13_{1-1}$ to $13_{1-30}$, and the slave node $11_N$ accommodates 30 subscriber terminals $13_{N-1}$ to $13_{N-30}$. As described above, some of the subscriber terminals $13_{1-1}$ to $13_{1-30}$ may be telephone sets for the PSTN and the remaining ones of the subscriber terminals $13_{1-1}$ to $13_{1-30}$ may be telephone sets for the ISDN BA. This similarly applies to the other terminals such as the terminals $13_{N-1}$ to $13_{N-30}$.

The master node 120 is on one hand connected to the local exchange 300, which is an externally connected apparatus, by the E1 Link 200 using the V5 interface and on the other hand connected to the network 140. In regard to the connection by the E1 Link 200, where the V5.1 interface is used, one channel is used, but where the V5.2 interface is used, 16 channels are used in the maximum as described hereinabove. Meanwhile, the network 140 is a network which includes, for example, an in-company LAN (ethernet, token ring) or a WAN (Wide Area Network) and interconnects the master node 120 and the slave nodes 110 using the IP (Internet Protocol) or the like.

Each of the slave nodes 110 acquires an IP address (NSAP) of the master node 120 from the maintenance-operation terminal 400 and stores the IP address, and the master node 120 acquires an IP address (NSAP) of each of the slave nodes and the type (for example, distinction between the PSTN and the ISDN BA) of a connected subscriber terminal for each port number (TSAP) of the slave node from the maintenance-operation terminal 400 and stores the acquired information.

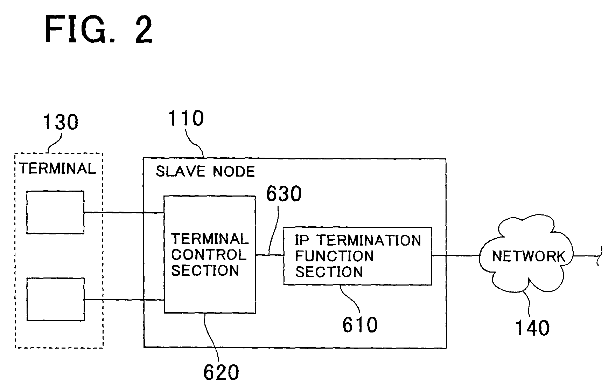

Now, a construction of the slave node is described in detail with reference to FIG. 2.

Each of the slave nodes 110 includes an IP termination function section 610 and a terminal control section 620. The IP termination function section 610 and the terminal control section 620 are connected to each other by the V5.1 interface. The terminal control section 620 receives control messages of the V5.1 interface from the subscriber terminal 130 and controls PSTN subscriber terminals 130 and ISDN BA subscriber terminals 130. In order for a subscriber terminal 130 to transmit information to another subscriber terminal or the like, the IP termination function section 610 receives the information from the terminal control section 620 through the V5 interface, then converts data of time slots (TS) of the bearer channel (Bch) and the communication channel (Cch) of the V5 interface into an IP packet, adds an IP header to the IP packet and signals the resulting IP packet to the network 140. According to the protocol for the V5 interface, time slots of the Bch and the Cch are allocated fixedly to an IP packet in accordance with the Recommendations, and protocol conversion of the Bch and the Cch is performed by switching them. Various methods may possibly be applied to such a conversion system as just described, and an arbitrary method can be employed in accordance with the necessity for the channel.

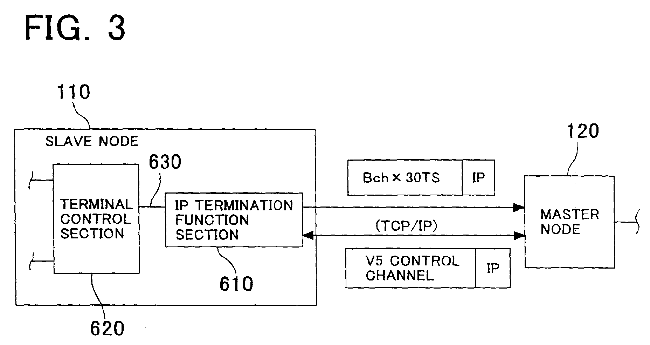

As shown in FIG. 3, in the access network 100, the rate between the IP termination function section 610 of the slave nodes 110 and the master node 120 is fixed to 2 Mbps  (time slot (TS) of the bearer data channel (Bch) of the V5 interface × 30 + time slot (TS) of the communication channel (Cch) of the V5 interface × 1),      and information of the Bch is communicated by collecting the information for 30 time slots into an IP packet and performing circuit emulation while information of the Cch is communicated using the TCP/IP.

In this instance, while the quality when information of the Bch is transferred may not be assured to some degree, since information of the Cch is control information, the communication quality of the information must be secured, and therefore, information of the Cch is communicated using the TCP/IP. If information of the Cch cannot be communicated regularly, all of the Bch × 30 channels are disabled, and the influence is very significant. Although information of the Bch can naturally be transferred using the TCP/IP, in this instance, totaling 31 channels of the Bch and the Cch must be processed in accordance with the TCP/IP, and the processing becomes heavy as much. Therefore, the IP and the TCP/IP are used separately in accordance with the significance of the channel.

Subsequently, functions of the master node 120 are described. The functions of the master node 120 are similar to those of the IP termination function section 610 in the slave nodes 110. Each of the slave nodes 110 has two interfaces, one of which accommodates one or a plurality of slave nodes 110 through the network 140 such as, for example, a LAN. The other interface is connected to the E1 Link 200 and interfaces with the local exchange 300 through the V5.1 or V5.2 interface. Here, the master node 120 converts information of the Bch on the IP (transmitted over the network 140) and information transferred from each slave node 110 in accordance with the TCP/IP into time slots of the V5.1 interface or the V5.2 interface. Where the V5.2 interface is used, since there is the possibility that a plurality of E1 Links 200 may be used, also concentration processing is performed.

The local exchange 300 may be an existing local exchange, and accommodates the access network through the V5 interface and performs call processing to realize interfacing with the public network 500.

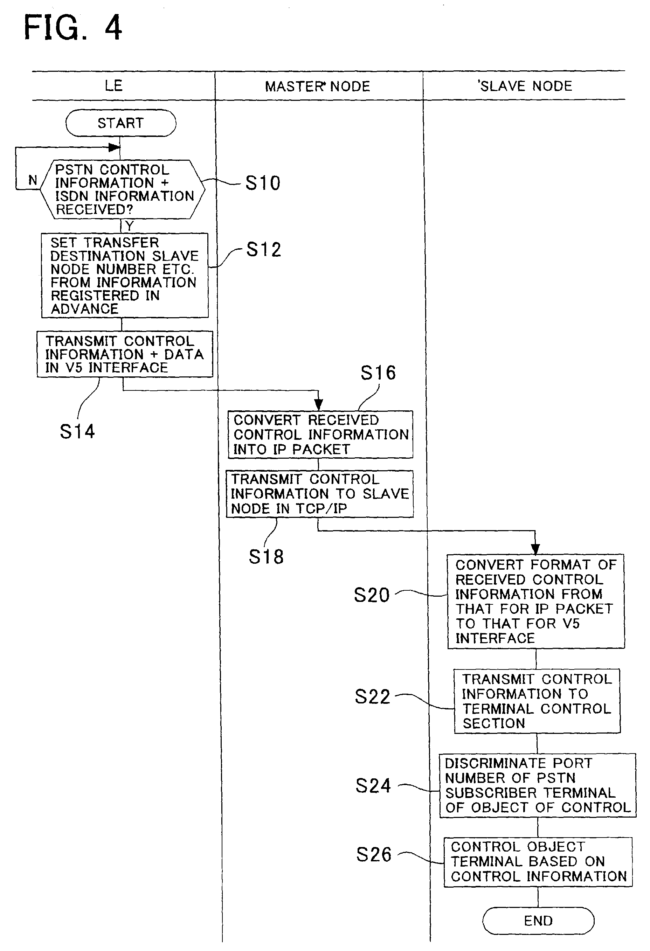

Now, a flow of processing of the system having the construction described above is described with reference to FIG. 4 taking operation regarding a PSTN subscriber terminal (processing principally regarding control information) as an example. In FIG. 4, the processes are described for the individual elements which perform the processes, that is, separately for the local exchange 300, master node 120 and slave nodes 110.

First in step S10, the local exchange 300 waits PSTN control information and ISDN information transmitted thereto from some other terminal through the public network 500 and so forth. Here, the PSTN control information is a signal for indicating, for example, call connection of a telephone set (PSTN subscriber terminal), a trouble, control of a message channel and so forth to the telephone set. The ISDN information includes information necessary for call processing such as a telephone number of the other party. When the control information is received, the local exchange 300 refers, in step S12, to the NSAP (IP address) and so forth of the slave node 110 acquired in advance from the maintenance-operation terminal 400 to acquire a master node number, a slave node number and a port number and performs mapping on the Cch of the V5 interface. Similar processing is performed also for audio data and so forth described hereinabove. Then in step S14, the local exchange 300 transmits the control information and the data to the master node 120 over the E1 Link 200 (Cch of the V5 interface).

Then in step S16, the master node 120 converts the received control information into an IP packet. Although the master node 120 sometimes receives audio data and so forth over the Bch in the E1 Link, it similarly converts also the data into an IP packet. Then, the master node 120 transmits the IP packet including the control information using the TCP/IP in step S18. On the other hand, an IP packet which relates to audio data and so forth is transmitted using the IP by circuit emulation.

The slave node 110 receives the IP packet transmitted from the master node 120 and including the control information, and converts the packet into a packet for the V5 interface in step S20. This process is performed by the IP termination function section 610 in the slave node 110 shown in FIG. 2. Also when an IP packet relating to audio data and so forth is received, similar processing is performed. Then in step S22, the slave node 110 transmits the information to the terminal control section 620 in the slave node 110 through the V5.1. The terminal control section 620 thus discriminates the port number of the PSTN terminal, which makes an object of control, based on the received control information in step S24 and executes control based on the control information for the terminal in step S26.

While an example wherein control is performed from the public network 500 toward the subscriber terminal 130 through the local exchange 300, master node 120 and slave node 110 is described above, when control information or audio data is to be transmitted reversely from the subscriber terminal 130 side to another external subscriber terminal through the public network 500, a procedure opposite to that described above is taken.

Where an ISDN BA subscriber terminal is accommodated, communication of Dch information of the ISDN BA between the local exchange 300 and the master node 120 is performed through the Cch of the V5 interface. The terminal control section 620 controls the ISDN BA subscriber terminal based on the information.

While the access network 100 having a single master node is described as a preferred embodiment of the present invention above, also it is possible to construct an access network such that it includes a plurality of master nodes each of which includes a plurality of same slave nodes. In this instance, such control is possible that each slave node selects one of the master nodes, which has, for example, a low occupation, using an internal protocol between the slave node and the master node and performs communication through the selected master node.

While a preferred embodiment of the present invention has been described using specific terms, such description is for illustrative purposes only, and it is to be understood that changes and variations may be made without departing from the spirit or scope of the following claims.

**Claims**

1. An access network, characterized in that it comprises:

   a master node (120) connected to an external apparatus (300);
   at least one slave node (110) which accommodates at least one subscriber terminal (130); and
   a network (140) provided between said slave node (110) and said master node (120);
   said master node (120) and said slave node (110) communicating information regarding said subscriber terminal (130) on said network (140) using a protocol different from a protocol used for connection to the outside of said network (140).

2. An access network as set forth in claim 1, characterized in that communication of information between said master node (120) and said external apparatus (300) and communication of information between said slave node (110) and said subscriber terminal (130) are performed in accordance with a first protocol while communication of information regarding said subscriber terminal (130) on said network (140) is performed in accordance with a second protocol different from the first protocol, and said master node (120) and said slave node (110) mutually convert the format of information in order to allow communication of information between the first and second protocols different from each other.

3. An access network as set forth in claim 2, characterized in that the information regarding said subscriber terminal (130) includes input/output information which is inputted to/outputted from said subscriber terminal (130) and control information to be used to control operation of said subscriber terminal (130).

4. An access network as set forth in claim 3, characterized in that said slave node (110) includes an information format conversion section (610) and a terminal control section (620), and said information format conversion section (610) converts the format of information in order to communicate information with said master node (120) using the second protocol and communicate information with said terminal control section (620) using the first protocol whereas said terminal control section (620) provides, when information is received from said information format conversion section (610), input/output information to said subscriber terminal (130) using the first protocol and controls said subscriber terminal (130) based on the control information, but transmits, when information is received from said subscriber terminal (130), the information to said information format conversion section (610).

5. An access network as set forth in claim 4, characterized in that the first protocol is a protocol for the V5 interface.

6. An access network as set forth in claim 4, characterized in that the second protocol is a protocol based on the Internet Protocol.

7. An access network as set forth in claim 6, characterized in that the control information is communicated using the TCP/IP on said network (140), and the input/output information is communicated using the Internet Protocol on said network (140).

8. An access network as set forth in claim 7, characterized in that, when the input/output information is communicated using the Internet Protocol, the input/output information for 30 time slots of the Bch of the V5 interface is gathered into an IP packet.

9. An access network as set forth in claim 6, characterized in that, upon communication of information on said network (140), an IP address corresponding to each node is used as a destination.

10. An access network as set forth in claim 9, characterized in that it further comprises a maintenance-operation terminal (400) connected to said network (140) and operable to transmit, prior to communication of information on said network (140), an IP address of said master node (120) to said slave node (110) and transmit an IP address of said slave node (110) to said master node (120).

11. An access network as set forth in claim 1, characterized in that said external apparatus (300) is an exchange connected to a public switched telephone network (500).

12. An access network as set forth in claim 1, characterized in that said subscriber terminal (130) is a terminal used by a PSTN subscriber or an ISDN BA subscriber.

13. An access network, characterized in that it comprises:

a plurality of master nodes (120) connected to an external apparatus (300);
at least one slave node (110) which accommodates at least one subscriber terminal (130); and
a network (140) for connecting said slave node (110) to said master nodes (120);
each of said master nodes (120) and said slave node (110) communicating information regarding said subscriber terminal (130) on said network (140) using a protocol different from a protocol used for connection to the outside of said network (140).

14. A method of communicating, in an access network (100) wherein a master node (120) connected to an external apparatus (300) and a slave node (110) which accommodates a subscriber terminal (130) are connected to each other by a network (140), information with said subscriber terminal (130), characterized in that it comprises:

a first step performed by said master node (120) of receiving information destined for said subscriber terminal (130) in a first protocol from the outside of said access network (100), converting the format of the information and transmitting the information of the converted format to said slave node (110) using a second protocol; and
a second step performed by said slave node (110) of receiving the information in the second protocol, converting the format of the received information and transmitting the information of the converted format to said subscriber terminal (130) using the first protocol.

15. A method of communicating, in an access network (100) wherein a master node (120) connected to an external apparatus (300) and a slave node (110) which accommodates a subscriber terminal (130) are connected to each other by a network (140), information with said subscriber terminal (130), characterized in that it comprises:

a first step performed by said subscriber terminal (130) of transmitting information destined for another subscriber terminal (130) which is outside said access network (100) using a first protocol;
a second step performed by said slave node (110) of receiving the information from said subscriber terminal (130) in the first protocol, converting the format of the information and transmitting the information of the converted format to said master node (120) using a second protocol; and
a third step performed by said master node (120) of receiving the information in the second protocol, converting the format of the received information and transmitting the information of the converted format to the external subscriber terminal (130), which is outside said access network (100), using the first protocol.

16. A method as set forth in claim 14 or 15, characterized in that the first protocol is a protocol for the V5 interface.

17. A method as set forth in claim 14 or 15, characterized in that the second protocol is a protocol based on the Internet Protocol.

18. A method as set forth in claim 17, characterized in that, in the second step in which the second protocol is used, an IP address is used to identify the destination of the transmission.

19. A method as set forth in claim 18, characterized in that it further comprises, prior to the second step in which the second protocol is used, a step of notifying the source of the transmission of an IP address of a candidate to the transmission destination.

20. A computer-readable recording medium on which a program for causing, in an access network (100) wherein a master node (120) connected to an external apparatus (300) and a slave node (110) which accommodates a subscriber terminal (130) are connected to each other by a network (140), information to be communicated with said subscriber terminal (130), characterized in that said program comprises:

a first step performed by said master node (120) of receiving information destined for said subscriber terminal (130) in a first protocol from the outside of said access network (100), converting the format of the information and transmitting the information of the converted format to said slave node (110) using a second protocol; and
a second step performed by said slave node (110) of receiving the information in the second protocol, converting the format of the received information and transmitting the information of the converted format to said subscriber terminal (130) using the first protocol.

21. A computer-readable recording medium on which a program for causing, in an access network (100) wherein a master node (120) connected to an external apparatus (300) and a slave node (110) which accommodates a subscriber terminal (130) are connected to each other by a network (140), information to be communicated with said subscriber terminal (130), characterized in that said program comprises:

a first step performed by said subscriber terminal (130) of transmitting information destined for another subscriber terminal (130) which is outside said access network (100) using a first protocol;

a second step performed by said slave node (110) of receiving the information from said subscriber terminal (130) in the first protocol, converting the format of the information and transmitting the information of the converted format to said master node (120) using a second protocol; and

a third step performed by said master node (120) of receiving the information in the second protocol, converting the format of the received information and transmitting the information of the converted format to the external subscriber terminal (130), which is outside said access network (100), using the first protocol.

# FIG. 1

# FIG. 2

130

110

TERMINAL

SLAVE NODE

630

TERMINAL
CONTROL
SECTION

IP TERMINATION
FUNCTION
SECTION

NETWORK

610

140

620

# FIG. 3

110

## SLAVE NODE

630

| TERMINAL CONTROL SECTION | IP TERMINATION FUNCTION SECTION |

620

610

| Bch × 30TS | IP |

(TCP/IP)

| V5 CONTROL CHANNEL | IP |

120

MASTER NODE

# FIG. 4

| LE | MASTER NODE | SLAVE NODE |
|---|---|---|

**LE:**

( START )

N — PSTN CONTROL INFORMATION + ISDN INFORMATION RECEIVED? — S10

Y

SET TRANSFER DESTINATION SLAVE NODE NUMBER ETC. FROM INFORMATION REGISTERED IN ADVANCE — S12

TRANSMIT CONTROL INFORMATION + DATA IN V5 INTERFACE

S14

**MASTER NODE:**

S16

CONVERT RECEIVED CONTROL INFORMATION INTO IP PACKET

TRANSMIT CONTROL INFORMATION TO SLAVE NODE IN TCP/IP

S18

**SLAVE NODE:**

S20 — CONVERT FORMAT OF RECEIVED CONTROL INFORMATION FROM THAT FOR IP PACKET TO THAT FOR V5 INTERFACE

S22 — TRANSMIT CONTROL INFORMATION TO TERMINAL CONTROL SECTION

S24 — DISCRIMINATE PORT NUMBER OF PSTN SUBSCRIBER TERMINAL OF OBJECT OF CONTROL

S26 — CONTROL OBJECT TERMINAL BASED ON CONTROL INFORMATION

( END )